# EUROPÄISCHE PATENTSCHRIFT

(11) **EP 3 511 503 B1**
(45) Veröffentlichungstag und Bekanntmachung des Hinweises auf die Patenterteilung: **31.08.2022**
(21) Anmeldenummer: 19158989.4
(22) Anmeldetag: 03.06.2015
(51) Int. Cl.: E05F 15/40, E05F 15/42, E05F 15/47, E05D 15/30

(54) **SCHWENKTÜRKONSTRUKTION FÜR EIN FAHRZEUG, VORZUGSWEISE EINEN OMNIBUS**
PIVOTING DOOR STRUCTURE FOR A VEHICLE, PREFERABLY A BUS
CONSTRUCTION DE PORTE PIVOTANTE POUR UN VÉHICULE, DE PRÉFÉRENCE POUR UN OMNIBUS

(30) Priorität: 03.07.2014 DE 102014009855
(43) Veröffentlichungstag der Anmeldung: 17.07.2019
(62) Teilanmeldung aus: 15001663.2
(73) Patentinhaber: MAN Truck & Bus SE, 80995 München (DE)
(72) Erfinder: Deufel, Thomas, 85256 Vierkirchen (DE); Schilling, Fabrice, 07546 Gera (DE); Schöller, Michael, 82166 Gräfelfing (DE)
(74) Vertreter: v. Bezold & Partner Patentanwälte - PartG mbB

(56) Entgegenhaltungen:
- EP-A2- 0 215 316
- EP-A2- 0 940 278
- DE-A1-102004 053 753
- DE-U1-202008 004 592

## Beschreibung

Die Erfindung betrifft eine Schwenktürkonstruktion für ein Kraftfahrzeug, vorzugsweise einen Omnibus. Die Schwenktürkonstruktion ist insbesondere als z. B. zweiflüglige Innenschwenktürkonstruktion ausgeführt.

Zum allgemeinen Stand der Technik kann zunächst verwiesen werden auf die DE 20 2008 004 592 U1, die US 6 108 976 A, die EP 1 658 450 A1 und die DE 10 2004 053 753 A1. DE 20 2008 004 592 U1 offenbart insbesondere eine Türsystem für einen Türeinstieg eines Personenbeförderungsfahrzeuges, wobei die Tür mittels einer Verstellantriebsvorrichtung und einer Steuereinheit zwischen einer geschlossenen Stellung und einer geöffneten Stellung bewegbar ist, wobei wenigstens ein Kraftaufnehmer zur Erfassung von bei und/oder durch die Bewegung der Tür auftretenden Kräften und eine Auswerteinheit zur Auswertung der von dem Kraftaufnehmer erhaltenen Messwerte vorgesehen ist. DE 10 2004 053 753 A1 offenbart insbesondere eine Innenschwenktür für einen Omnibus, mit zwei Türflügeln, die zwischen einer Schließstellung und einer Offenstellung jeweils um eine Schwenkachse verschwenkbar sind, wobei zumindest einer der Türflügel eine Stabilisierungseinrichtung mit einem ausfahrbaren Abstützelement aufweist, wobei das ausgefahrene Abstützelement in der Schließstellung den jeweiligen Türflügel parallel zur jeweiligen Schwenkachse zwischen einem oberen Abschnitt eines Türrahmens und einem Trittbrett mit einer vorbestimmten und/oder einstellbaren Spannkraft einspannt, wobei der jeweilige Türflügel bei eingefahrenem Abstützelement frei zwischen Schließstellung und Offenstellung verschwenkbar ist.Innenschwenktürkonstruktionen für Omnibusse umfassen in der Regel zwei verschwenkbare Türblätter und eine Führungsmechanik für die Türblätter. Derartige Innenschwenktürkonstruktionen sind üblicherweise mit sogenannten Druckwellenschaltern ausgestattet. Die Druckwellenschalter dienen dazu, zu erfassen, ob die Türblätter während eines Schließvorgangs auf ein Hindernis (z. B. ein- oder aussteigende Fahrgäste) treffen. Sofern ein Hindernis getroffen wird, kann der Schließvorgang der Türblätter gestoppt oder reversiert werden.

In der Praxis sind die Druckwellenschalter üblicherweise türblattextern angeordnet. Nachteilhaft daran ist insbesondere der erforderliche Platzbedarf und die Länge der Druckleitung, so dass Steuersignale verzögert verarbeitet und umgewandelt werden.

Eine Aufgabe der Erfindung ist es, eine verbesserte und/oder alternative Schwenktürkonstruktion für ein Kraftfahrzeug, vorzugsweise einen Omnibus, zu schaffen.

Diese Aufgabe wird mit den Merkmalen des unabhängigen Anspruchs gelöst. Vorteilhafte Weiterbildungen der Erfindung können den Unteransprüchen und der folgenden Beschreibung entnommen werden.

Die Erfindung schafft eine Schwenktürkonstruktion für ein Kraftfahrzeug, vorzugsweise einen Omnibus, insbesondere einen Stadtbus. Die Schwenktürkonstruktion umfasst zumindest ein zum Öffnen und Schließen verschwenkbares Türblatt, zumindest eine Führungsmechanik für das Türblatt und zumindest einen Schalter (z. B. ein Erfassungselement) für das Türblatt, insbesondere einen Druckwellenschalter. Der Druckwellenschalter dient dazu, zu erfassen, ob das Türblatt während eines Schließvorgangs auf ein Hindernis (z. B. Fahrgast oder ein unerwünschter Gegenstand) trifft. Es ist möglich, dass die Schwenktürkonstruktion so ausgeführt ist, dass, wenn ein Hindernis mittels des Schalters erfasst wird, der Schließvorgang des Türblatts gestoppt und/oder reversiert wird.

Die Schwenktürkonstruktion zeichnet sich dadurch aus, dass der Schalter an dem Türblatt festgelegt (z. B. montiert, angebracht, türblattfest, etc.) ist und zweckmäßig gemeinsam mit dem Türblatt verschwenkbar ist.

Dadurch kann eine verbesserte, zweckmäßig torsionsarme Steuerkabelführung für den Schalter ermöglicht werden und zudem das Erfassen, ob das Türblatt während eines Schließvorgangs auf ein Hindernis trifft, verbessert werden, insbesondere wegen der ermöglichten verkürzten Steuerkabelführung.

Die Führungsmechanik umfasst eine türblattseitige Führungsmechanik . Die Schwenktürkonstruktion zeichnet sich somit dadurch aus, dass sie mit einer türblattseitigen Führungsmechanik versehen ist und einen integrierten Schalter aufweist.

Der Schalter ist in der türblattseitigen Führungsmechanik angeordnet, insbesondere darin integriert. Erfindungsgemäß ist der Schalter in eine türblattseitige Führungsschiene integriert.

Die türblattseitige Führungsmechanik erstreckt sich entlang des oberen Endes des Türblatts. Der Schalter ist vorzugsweise an einem oberen Eckbereich des Türblatts insbesondere türblattfest angebracht.

Die türblattseitige Führungsmechanik umfasst eine z. B. im Wesentlichen U-förmige Führungsschiene. Der Schalter ist in der Führungsschiene angeordnet.

Die Führungsmechanik umfasst darüber hinaus eine türrahmenseitige Führungsmechanik für das Türblatt.

Die türrahmenseitige Führungsmechanik umfasst eine Führungsschiene, die zum Führen einer Rolle oder eines Kulissensteins dient.

Die türblattseitige Führungsmechanik und die türrahmenseitige Führungsmechanik sind über ein verfahrbares Verbindungselement miteinander verbunden.

Das Verbindungselement trägt (vorzugsweise unten) den Schalter und (vorzugsweise oben) das geführte Führungselement (z. B. Rolle oder Kulissenstein) der türrahmenseitigen Führungsmechanik.

Der Schalter kann mit einem Steuerkabel verbunden sein. Das Steuerkabel dient zur Verbindung des Schalters mit einer Türsteuereinheit.

Es ist möglich, dass das Steuerkabel sich durch zumindest eines von Folgendem auszeichnet: Es verläuft abschnittsweise in der türblattseitigen Führungsmechanik, es ist an dem geführten Führungselement der türrahmenseitigen Führungsmechanik montiert, es verläuft durch eine Öffnung (z. B. eine Nut) am oder im geführten Führungselement der türrahmenseitigen Führungsmechanik, es verläuft durch eine Öffnung in der türrahmenseitigen Führungsmechanik (insbesondere der Führungsschiene), es verläuft entlang der Führungsschiene der türrahmenseitigen Führungsmechanik, es verläuft entlang des Verbindungselements und/oder es erstreckt sich durch eine Durchgangsöffnung in dem Verbindungselement.

Die türblattseitige Führungsmechanik umfasst eine Führungsschiene .

Die türrahmenseitige Führungsmechanik umfasst eine Führungsschiene und einen darin geführten Kulissenstein oder eine darin geführte Rolle, so dass die türrahmenseitige Führungsmechanik zweckmäßig als Schienen-Kulissenstein-Konstruktion oder Schienen-Rollen-Konstruktion bezeichnet werden kann.

Die Schwenktürkonstruktion kann vorzugsweise als z. B. zweiflüglige (zweiblättrige) oder einflüglige (einblättrige) Innenschwenktürkonstruktion ausgeführt sein.

Zu erwähnen ist, dass die türblattseitige Führungsmechanik zweckmäßig mit dem Türblatt mitverschwenkbar ist und/oder türblattfest angebracht ist.

Zu erwähnen ist ferner, dass die türrahmenseitige Führungsmechanik zweckmäßig nicht mit dem Türblatt mitverschwenkbar ist.

Zu erwähnen ist außerdem, dass die türblattseitige Führungsmechanik und/oder die türrahmenseitige Führungsmechanik vorzugsweise als Linearführung ausgeführt sind.

Zu erwähnen ist darüber hinaus, dass das Merkmal "Schalter" im Rahmen der Erfindung vorzugsweise allgemein Erfassungsmittel umfasst, die dazu dienen, zu erfassen, ob das Türblatt während eines Schließvorgangs auf ein Hindernis trifft.

Die Erfindung ist nicht auf eine Schwenktürkonstruktion beschränkt, sondern umfasst auch ein Kraftfahrzeug, vorzugsweise einen Omnibus, insbesondere einen Stadtbus, mit einer Schwenktürkonstruktion wie hierin beschrieben.

Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Schwenktürkonstruktion von außen gemäß einer Ausführungsform der Erfindung,
- Figur 2: zeigt eine perspektivische Detailansicht eines Teils der Schwenktürkonstruktion der Figur 1 von innen,
- Figur 3: zeigt eine perspektivische Detailansicht eines Teils der Schwenktürkonstruktion der Figuren 1 und 2 mit zu Darstellungszwecken weggelassenem Türblatt,
- Figur 4: zeigt eine perspektivische Detailansicht eines Teils der Schwenktürkonstruktion der Figuren 1 bis 3,
- Figur 5: zeigt eine andere perspektivische Detailansicht eines Teils der Schwenktürkonstruktion der Figuren 1 bis 4 von innen, und
- Figur 6: zeigt eine perspektivische Ansicht der Schwenktürkonstruktion der Figuren 1 bis 5 von innen.

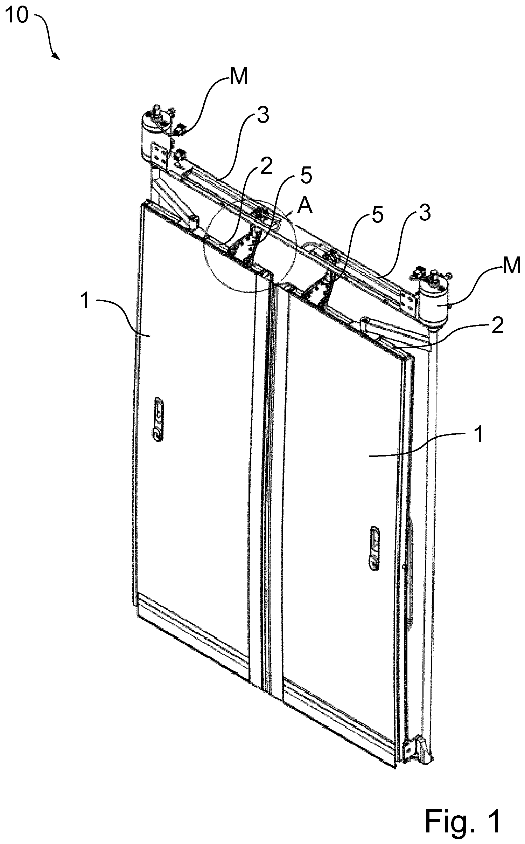

Figur 1 zeigt eine Schwenktürkonstruktion 10 für ein Kraftfahrzeug, vorzugsweise einen Stadtbus, gemäß einer Ausführungsform der Erfindung. Die Schwenktürkonstruktion 10 ist als Innenschwenktürkonstruktion ausgeführt und umfasst zwei zum Öffnen nach innen und zum Schließen nach außen verschwenkbare Türblätter 1.

Die zwei Türblätter 1 sind im Wesentlichen spiegelsymmetrisch angeordnet und baugleich ausgeführt. Die Schwenktürkonstruktion 10 wird deshalb unter Bezugnahme auf nur ein Türblatt 1 beschrieben.

Die Schwenktürkonstruktion 10 umfasst eine türblattseitige (Türblatt-feste) Führungsmechanik 2 und eine türrahmenseitige (Türrahmen-feste) Führungsmechanik 3 für das Türblatt 1. Die türblattseitige Führungsmechanik 2 ist oben an dem Türblatt 1 angebracht, während die türrahmenseitige Führungsmechanik 3 am Türrahmen oder einer anderen nicht öffenbaren Kraftfahrzeug-Struktur (nicht gezeigt) angebracht ist. Das Türblatt 1 kann über einen Türblatt-Antriebs-Motor M, die türrahmenseitige Führungsmechanik 3, ein weiter unten beschriebenes verfahrbares Verbindungselement 5 und die türblattseitige Führungsmechanik 3 verschwenkt und dadurch geöffnet und geschlossen werden.

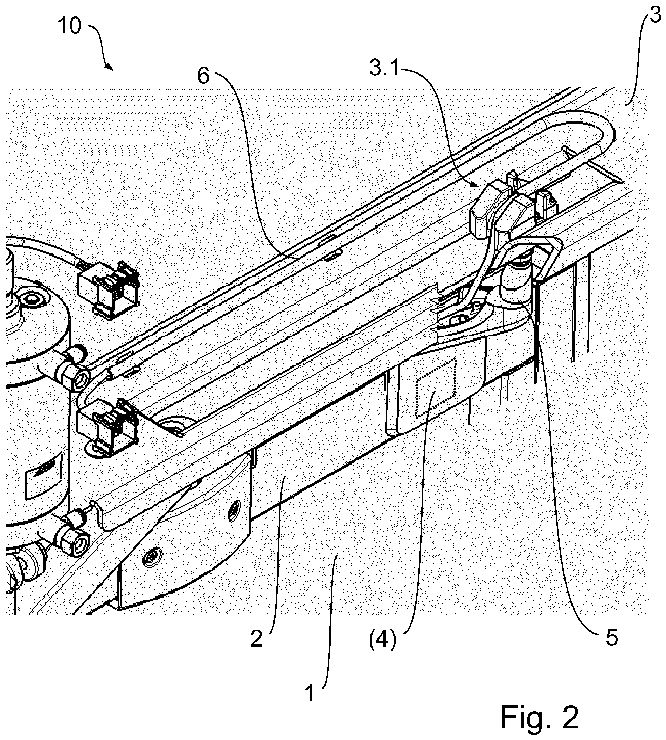

Figur 2 zeigt eine perspektivische Detailansicht des Teils A der Schwenktürkonstruktion 10 der Figur 1 von innen.

Bezugszeichen 4 zeigt auf einen in Figur 2 verdeckten, schematisch dargestellten Schalter 4, zweckmäßig einen Druckwellenschalter, der dazu dient, zu erfassen, ob das Türblatt 1 während eines Schließvorgangs auf ein Hindernis (z. B. einen Fahrgast oder einen unerwünschten oder blockierenden Gegenstand) trifft. Der Schalter 4 kann an sich ein bekannter Druckwellenschalter sein und zur Umwandlung eines pneumatischen Signals in ein elektrisches Signal dienen. Sofern ein Hindernis mittels des Schalters 4 erfasst wird, kann der Schließvorgang des Türblatts 1 gestoppt und/oder reversiert werden, so dass der Schalter 4 einen Teil einer Einklemmschutzsicherung darstellt.

Eine Besonderheit der Schwenktürkonstruktion 10 ist, dass der Schalter 4 an dem Türblatt 1 festgelegt ist und somit in das Türblatt 1 integriert ist, um mit dem Türblatt 1 zu verschwenken. Der Schalter 4 ist hierzu in die türblattseitige Führungsmechanik 2 integriert.

Die Führungsmechanik 2 umfasst eine Führungsschiene und in einer nicht erfindungsgemäßen Ausführungsform ein darin geführtes Führungselement (z. B. eine Rolle oder einen Kulissenstein, nicht gezeigt). Besonders vorteilhaft ist, wenn der Schalter 4 in die Führungsschiene integriert ist. Es sind allerdings ebenso Ausführungsformen möglich, in denen der Schalter 4 außerhalb, z. B. lateral benachbart zu der Führungsschiene, angeordnet ist.

In Figur 2 ist ferner die türrahmenseitige Führungsmechanik 3 zu sehen. Die Führungsmechanik 3 umfasst eine Führungsschiene und einen darin geführten Kulissenstein 3.1, der allerdings auch als Rolle ausgeführt sein könnte.

Die türblattseitige Führungsmechanik 2 und die türrahmenseitige Führungsmechanik 3 sind über das Verbindungselement 5 miteinander verbunden. Das Verbindungselement 5 trägt zweckmäßig oben den Kulissenstein 3.1 und zweckmäßig unten den Schalter 4. Das Verbindungselement 5 trägt ferner in einer nicht erfindungsgemäßen Ausführungsform zweckmäßig unten das (nicht gezeigte) geführte Führungselement (z. B. Rolle oder Kulissenstein) der türblattseitigen Führungsmechanik 2.

Der Schalter 4 ist mit einem Steuerkabel 6 verbunden, das den Schalter 4 mit einer Türsteuereinheit verbindet, mittels der der Motor M steuerbar ist.

Das Steuerkabel 6 ist an dem geführten Kulissenstein 3.1 festgelegt und erstreckt sich zweckmäßig z. B. durch eine Öffnung, Nut, etc. an oder in dem Kulissenstein 3.1. Das Steuerkabel 6 erstreckt sich zudem entlang der Führungsschiene der türrahmenseitigen Führungsmechanik 3, durch die Führungsschiene der türrahmenseitigen Führungsmechanik 3 hindurch und über das Verbindungselement 5 hin zu dem in der türblattseitigen Führungsmechanik 2 angeordneten Schalter 4.

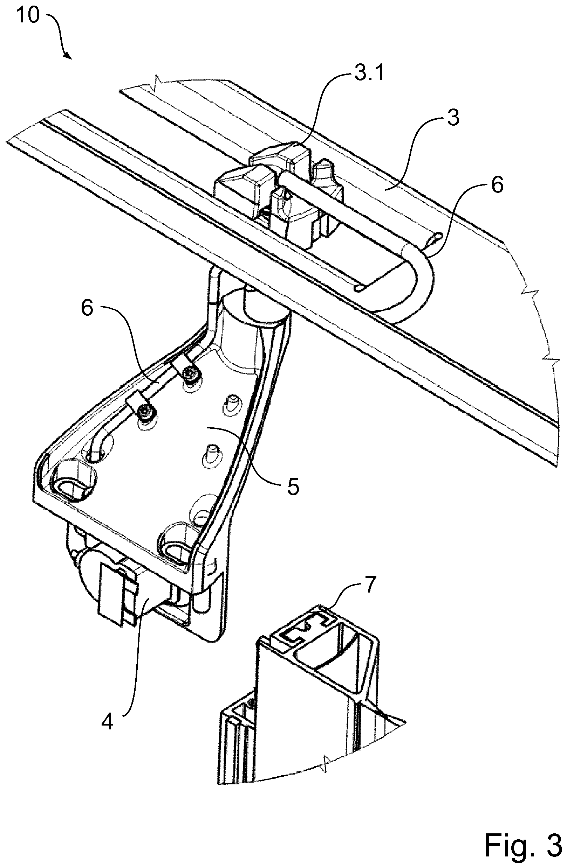

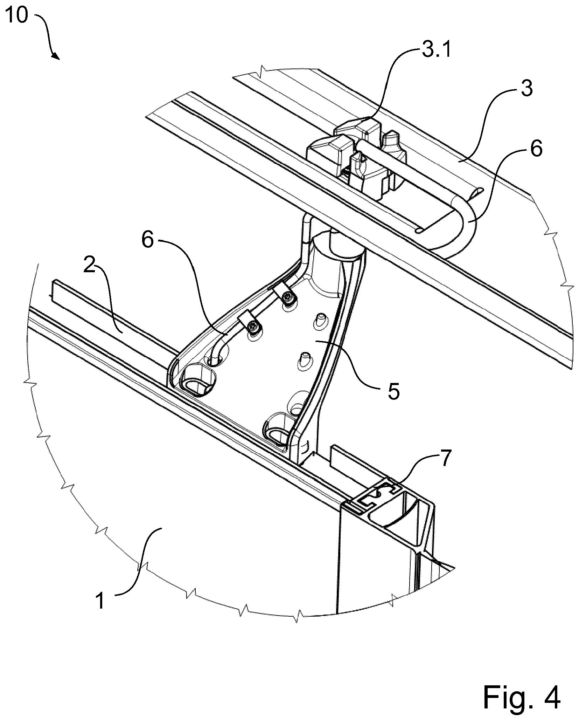

Die Figuren 3 und 4 zeigen Detailansichten eines Teils der Schwenktürkonstruktion 10 der Figuren 1 und 2, einmal mit zu Darstellungszwecken weggelassenem Türblatt 1 (Figur 3) und einmal mit Türblatt (Figur 4).

Den Figuren 3 und 4 kann nochmals entnommen werden, dass die türblattseitige Führungsmechanik 2 und die türrahmenseitige Führungsmechanik 3 über das Verbindungselement 5 miteinander verbunden sind.

Den Figuren 3 und 4 kann ferner entnommen werden, dass das Steuerkabel 6 an dem Verbindungselement 5 befestigt ist, entlang des Verbindungselements 5 verläuft und sich durch eine Durchlassöffnung durch das Verbindungselement 5 hin zu dem Schalter 4 erstreckt.

Das Bezugszeichen 7 kennzeichnet eine Hauptschließkante, insbesondere ein Abschlussprofil, zur Erzeugung einer Druckwelle für den Druckwellenschalter 4. Die Hauptschließkante kann an sich gemäß Stand der Technik ausgeführt sein.

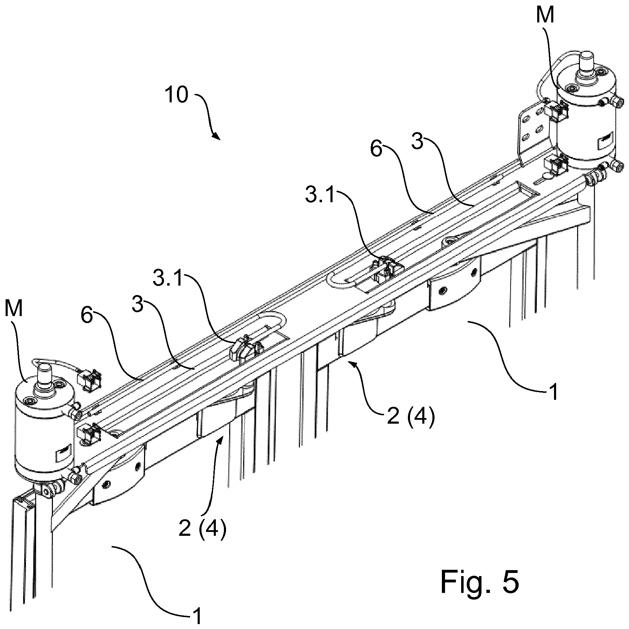

Figur 5 zeigt eine perspektivische Detailansicht der Schwenktürkonstruktion 10 der Figuren 1 bis 4.

Figur 5 kann insbesondere nochmals die torsionsoptimierte Verlegung des Steuerkabels 6 entnommen werden, nämlich von dem türblatt-fest angeordneten Schalter 4 aus, über das Verbindungselement 5 durch die Führungsschiene der türrahmenseitigen Führungsmechanik 3 hindurch zu dem Kulissenstein 3.1 und entlang Führungsschiene der türrahmenseitigen Führungsmechanik 3 hin zu der Türsteuereinheit.

Darüber hinaus kann Figur 5 die Integration des Schalters 4 (in Figur 5 nicht direkt zu sehen) in das Türblatt 1, insbesondere in die türblattseitige Führungsmechanik 2, entnommen werden.

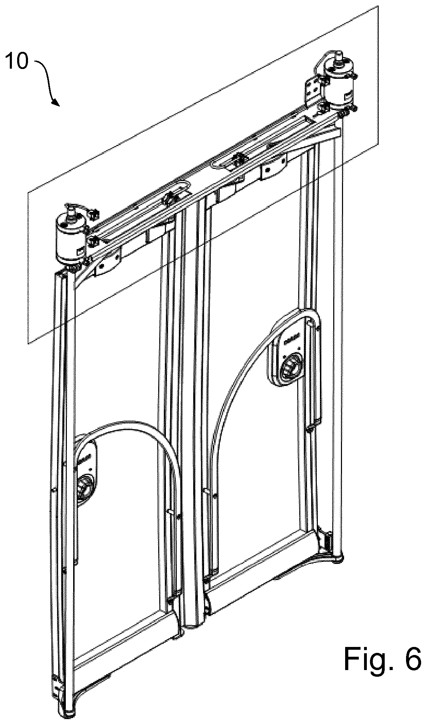

Figur 6 ist eine perspektivische Ansicht der Schwenktürkonstruktion der Figuren 1 bis 5 von innen, zu Darstellungszwecken allerdings ohne Bezugszeichen.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich der Ansprüchen fallen.

### Bezugszeichenliste

- 1: Türblatt
- 2: Türblattseitige Führungsmechanik
- 3: Türrahmenseitige Führungsmechanik
- 3.1: Geführtes Führungselement (z. B. Rolle oder Kulissenstein) der türrahmenseitigen Führungsmechanik
- 4: Schalter, insbesondere Druckwellenschalter
- 5: Verfahrbares Verbindungselement
- 6: Steuerkabel
- 7: Hauptschließkante, Druckwellenerzeuger
- 10: Schwenktürkonstruktion, insbesondere Innenschwenktürkonstruktion
- M: Motor zum Verschwenken des Türblatts

## Patentansprüche

1. Schwenktürkonstruktion (10) für ein Kraftfahrzeug, vorzugsweise einen Omnibus, mit zumindest einem verschwenkbaren Türblatt (1), zumindest einer Führungsmechanik (2, 3) für das Türblatt (1) und zumindest einem Schalter (4), vorzugsweise einem Druckwellenschalter, zum Erfassen, ob das Türblatt (1) während eines Schließvorgangs auf ein Hindernis trifft, wobei der Schalter (4) an dem Türblatt (1) festgelegt und mit dem Türblatt (1) verschwenkbar ist, wobei die Führungsmechanik (2, 3) eine türblattseitige Führungsmechanik (2) umfasst, **dadurch gekennzeichnet, dass** die türblattseitige Führungsmechanik (2) sich entlang des oberen Endes des Türblatts (1) erstreckt und eine Führungsschiene umfasst und der Schalter (4) in der Führungsschiene angeordnet ist, wobei die Führungsmechanik (2, 3) eine türrahmenseitige Führungsmechanik (3) für das Türblatt (1) umfasst, wobei die türblattseitige Führungsmechanik (2) und die türrahmenseitige Führungsmechanik (3) über ein verfahrbares Verbindungselement (5) miteinander verbunden sind und das Verbindungselement (5) den Schalter (4) trägt, wobei das Verbindungselement (5) ein geführtes Führungselement (3.1) der türrahmenseitigen Führungsmechanik (3) trägt, wobei die türrahmenseitige Führungsmechanik (3) eine Führungsschiene umfasst, die zum Führen des als Rolle oder Kulissenstein ausgebildeten Führungselementes (3.1) dient.

2. Schwenktürkonstruktion (10) nach Anspruch 1 , **dadurch gekennzeichnet, dass** die türblattseitige Führungsmechanik (2) eine U-förmige Führungsschiene umfasst.

3. Schwenktürkonstruktion (10) nach einem der vorhergehenden Ansprüche, **dadurch gekennzeichnet, dass** der Schalter (4) mit einem Steuerkabel (6) verbunden ist, das sich durch zumindest eines von Folgendem auszeichnet:
- Das Steuerkabel (6) verläuft abschnittsweise in der türblattseitigen Führungsmechanik (2),
- das Steuerkabel (6) ist an dem geführten Führungselement (3.1) der türrahmenseitigen Führungsmechanik (3) montiert,
- das Steuerkabel (6) verläuft durch eine Öffnung an oder in dem geführten Führungselement (3.1) der türrahmenseitigen Führungsmechanik (3),
- das Steuerkabel (6) verläuft durch eine Öffnung in der Führungsschiene der türrahmenseitigen Führungsmechanik (3),
- das Steuerkabel (6) erstreckt sich entlang der Führungsschiene der türrahmenseitigen Führungsmechanik (3),
- das Steuerkabel (6) erstreckt sich entlang des Verbindungselements (5),
- das Steuerkabel (6) erstreckt sich durch eine Durchgangsöffnung in dem Verbindungselement (5).

4. Schwenktürkonstruktion (10) nach einem der vorhergehenden Ansprüche, **dadurch gekennzeichnet, dass** die Schwenktürkonstruktion (10) eine Innenschwenktürkonstruktion ist, vorzugsweise eine zweiflüglige Innenschwenktürkonstruktion.

5. Schwenktürkonstruktion (10) nach einem der vorhergehenden Ansprüche, **dadurch gekennzeichnet, dass** der Schalter (4) in einem oberen Eckbereich des Türblatts (2) türblattfest angeordnet ist.

6. Kraftfahrzeug, vorzugsweise Omnibus, mit einer Schwenktürkonstruktion (10) nach einem der vorhergehenden Ansprüche.

## Claims

1. A swinging door structure (10) for a motor vehicle, preferably a bus, having at least one pivotable door leaf (1), at least one guide mechanism (2, 3) for the door leaf (1), and at least one switch (4), preferably a pressure wave switch, for detecting whether the door leaf (1) strikes an object during a closing operation, wherein the switch (4) is secured to the door leaf (1) and can be pivoted with the door leaf (1), wherein the guide mechanism (2, 3) comprises a door leaf-side guide mechanism (2), **characterized in that**
the door leaf-side guide mechanism (2) extends along the upper end of the door leaf (1) and comprises a guide rail, and the switch (4) is disposed in the guide rail, wherein the guide mechanism (2, 3) comprises a door frame-side guide mechanism (3) for the door leaf (1), wherein the door leaf-side guide mechanism (2) and the door frame-side guide mechanism (3) are connected to one another by way of a displaceable connection element (5), and the connection element (5) carries the switch (4), wherein the connection element (5) carries a guided guide element (3.1) of the door frame-side guide mechanism (3), wherein the door frame-side guide mechanism (3) comprises a guide rail which serves for guiding the guide element (3.1) configured as a roller or a slide block.

2. The swinging door structure (10) according to Claim 1, **characterized in that** the door leaf-side guide mechanism (2) comprises a U-shaped guide rail.

3. The swinging door structure (10) according to one of the preceding claims, **characterized in that** the switch (4) is connected to a control cable (6) which is distinguished by at least one of the following:
- the control cable (6) runs in portions in the door leaf-side guide mechanism (2);
- the control cable (6) is mounted on the guided guide element (3.1) of the door frame-side guide mechanism (3);
- the control cable (6) runs through an opening on or in the guided guide element (3.1) of the door frame-side guide mechanism (3);
- the control cable (6) runs through an opening in the guide rail of the door frame-side guide mechanism (3);
- the control cable (6) extends along the guide rail of the door frame-side guide mechanism (3);
- the control cable (6) extends along the connection element (5);
- the control cable (6) extends through a through-opening in the connection element (5).

4. The swinging door structure (10) according to one of the preceding claims, **characterized in that** the swinging door structure (10) is an inward swinging door structure, preferably a two-leaf inward swinging door structure.

5. The swinging door structure (10) according to one of the preceding claims, **characterized in that** the switch (4) is arranged fixed on the door leaf in an upper corner region of the door leaf (2).

6. A motor vehicle, preferably a bus, having a swinging door structure (10) according to one of the preceding claims.

## Revendications

1. Construction de porte pivotante (10) pour un véhicule automobile, de préférence un autobus, comprenant au moins un vantail de porte (1) pivotant, au moins un mécanisme de guidage (2, 3) pour le vantail de porte (1) et au moins un commutateur (4), de préférence un commutateur à ondes de pression, destiné à détecter si le vantail de porte (1) heurte un obstacle pendant une opération de fermeture, le commutateur (4) étant fixé au vantail de porte (1) et pouvant pivoter avec le vantail de porte (1), le mécanisme de guidage (2, 3) comportant un mécanisme de guidage côté vantail de porte (2), **caractérisée en ce que** le mécanisme de guidage côté vantail de porte (2) s'étend le long de l'extrémité supérieure du vantail de porte (1) et comporte un rail de guidage et le commutateur (4) est disposé dans le rail de guidage, le mécanisme de guidage (2, 3) comportant un mécanisme de guidage côté cadre de porte (3) pour le vantail de porte (1), le mécanisme de guidage côté vantail de porte (2) et le mécanisme de guidage côté cadre de porte (3) étant reliés l'un à l'autre par le biais d'un élément de liaison (5) mobile et l'élément de liaison (5) portant le commutateur (4), l'élément de liaison (5) portant un élément de guidage (3.1) guidé du mécanisme de guidage côté cadre de porte (3), le mécanisme de guidage côté cadre de porte (3) comportant un rail de guidage qui sert à guider l'élément de guidage (3.1) réalisé sous la forme d'un galet ou d'un coulisseau.

2. Construction de porte pivotante (10) selon la revendication 1, **caractérisée en ce que** le mécanisme de guidage côté vantail de porte (2) comporte un rail de guidage en forme de U.

3. Construction de porte pivotante (10) selon l'une des revendications précédentes, **caractérisée en ce que** le commutateur (4) est relié à un câble de commande (6) qui se **caractérise par** au moins l'un des points suivants :
- le câble de commande (6) suit, par portions, un tracé dans le mécanisme de guidage côté vantail de porte (2),
- le câble de commande (6) est monté sur l'élément de guidage (3.1) guidé du mécanisme de guidage côté cadre de porte (3),
- le câble de commande (6) suit un tracé à travers une ouverture sur ou dans l'élément de guidage (3.1) guidé du mécanisme de guidage côté cadre de porte (3),
- le câble de commande (6) suit un tracé à travers une ouverture dans le rail de guidage du mécanisme de guidage côté cadre de porte (3),
- le câble de commande (6) s'étend le long du rail de guidage du mécanisme de guidage côté cadre de porte (3),
- le câble de commande (6) s'étend le long de l'élément de liaison (5),
- le câble de commande (6) s'étend à travers une ouverture de passage dans l'élément de liaison (5).

4. Construction de porte pivotante (10) selon l'une des revendications précédentes, **caractérisée en ce que** la construction de porte pivotante (10) est une construction de porte pivotante interne, de préférence une construction de porte pivotante interne à deux vantaux.

5. Construction de porte pivotante (10) selon l'une des revendications précédentes, **caractérisée en ce que** le commutateur (4) est disposé de manière fixe par rapport au vantail de porte dans une zone de coin supérieure du vantail de porte (2).

6. Véhicule automobile, de préférence autobus, équipé d'une construction de porte pivotante (10) selon l'une des revendications précédentes.
